# EUROPEAN PATENT SPECIFICATION

(11) **EP 4 317 850 B1**
(45) Date of publication and mention of the grant of the patent: **04.11.2026**
(21) Application number: 22780223.8
(22) Date of filing: 18.03.2022
(51) Int. Cl.: C09K 5/04, F25B 15/00, F25B 29/00, F25B 17/00, F25B 25/02

(54) **ABSORPTION REFRIGERATION CYCLE AND COMPRESSION-ABSORPTION REFRIGERATION CYCLE**
ABSORPTIONSKÄLTEKREISLAUF UND KOMPRESSIONSABSORPTIONSKÄLTEKREISLAUF
CYCLE DE RÉFRIGÉRATION À ABSORPTION ET CYCLE DE RÉFRIGÉRATION À ABSORPTION PAR COMPRESSION

(30) Priority: 31.03.2021 JP 2021060735
(43) Date of publication of application: 07.02.2024
(73) Proprietor: Osaka Gas Co., Ltd., Osaka-shi, Osaka 541-0046 (JP)
(72) Inventor: WAKABAYASHI, Tsutomu, Osaka-shi, Osaka 541-0046 (JP); HATTORI, Saori, Osaka-shi, Osaka 541-0046 (JP); YABASE, Hajime, Tokyo 106-0046 (JP); INOUE, Naoyuki, Tokyo 106-0046 (JP); IKUMI, Yonezo, Tokyo 106-0046 (JP); SAITO, Kiyoshi, Tokyo 169-8555 (JP)
(74) Representative: LBP Lemcke, Brommer & Partner Patentanwälte mbB
(86) International application number: PCT/JP2022/012509
(87) International publication number: WO 2022/210007

(56) References cited:
- CN-A- 102 965 082
- JP-A- 2009 047 354
- JP-A- 2013 249 326
- JP-A- 2014 159 926
- JP-A- 2018 507 381
- JP-A- S5 861 171
- JP-A- S57 101 271
- JP-U- S5 760 071
- US-A1- 2020 340 715

## Description

### Technical Field

The present invention relates to an absorption refrigeration cycle and a compression-absorption refrigeration cycle.

### Background Art

Conventionally, compression refrigeration cycles using a compressor and thermally driven absorption refrigeration cycles have been used as cooling systems in air conditioners.

Furthermore, systems in which an absorption refrigeration cycle is provided with a compressor in order to improve the performance of the system have been investigated. For example, JP H05-332633A (Patent Document 1) and JP 2003-307359A (Patent Document 2) disclose systems that use ammonia as a refrigerant, and in which a compressor is provided between an evaporator and an absorber.

### Prior Art Documents

### Patent Documents

Patent Documents 1: JP H05-332633A
Patent Documents 2: JP 2003-307359A
D1: US 2020/340715 A1
D2: CN 102 965 082 A
D3: JP 2013-249326 A

US 2020/340715 A1 discloses a diffusion absorption refrigeration apparatus using HFO refrigerants such as trans-1,3,3,3-tetrafluoropropene (R-1234ze(E)) and 2,3,3,3-tetrafluoropropene (R-1234yf). As an absorbent, D1 discloses the use of, for example, propylene glycol, triethylene glycol, and diethylene glycol.

CN 102 965 082 A discloses a working substance pair for an absorption thermal cycle. The working substance is a fluoro-olefin and the absorbent is a mixture of an ionic liquid and an organic liquid. The document specifies that the organic liquid can be a glycol ether and provides specific examples of suitable glycol ethers, including diethylene glycol diethyl ether and diethylene glycol dibutyl ether.

JP 2013-249326 A discloses an absorption refrigeration cycle using a refrigerant with a GWP of less than 1,000, selected from HFO, HFC, and HCFO refrigerants. As an absorption liquid, the document discloses for example diethylene glycol dimethyl ether.

### Disclosure of the Invention

### Problem to be Solved by the Invention

However, the techniques according to Patent Documents 1 and 2 use an ammonia refrigerant, which has a low global warming potential but is toxic, and thus require measures to protect against refrigerant leakage. In addition, although the technique according to Patent Document 1 discloses an example in which an R134a refrigerant, which is a non-toxic HFC refrigerant, is used, this refrigerant has a high global warming potential, and may not be used in the future.

Therefore, there is a need to realize an absorption refrigeration cycle capable of operating using a non-toxic refrigerant having a low global warming potential, and a compression-absorption refrigeration cycle provided with a compressor.

### Means for Solving Problem

A characteristic feature of an absorption refrigeration cycle according to the present invention lies in an absorption refrigeration cycle configured to operate using: a refrigerant having a global warming potential of less than 1000, and including at least one of an HFO-based refrigerant, an HFC-based refrigerant, and an HCFO-based refrigerant; and an absorbing liquid including triethylene glycol butyl methyl ether.

Preferred aspects of the present invention will now be described. However, the scope of the present invention is not limited by the examples of preferred aspects described below.

A characteristic feature of a compression-absorption refrigeration cycle according to the present invention lies in including: any of the above-described absorption refrigeration cycle; and a compression refrigeration cycle, wherein the absorption refrigeration cycle and the compression refrigeration cycle are combined in such a manner as to share the refrigerant.

With this configuration, it is possible to realize a compression-absorption refrigeration cycle that uses a non-toxic refrigerant having a relatively low global warming potential.

Further features and advantages of the present invention will become apparent from the following description of illustrative and non-limiting embodiments with reference to the drawings.

### Brief Description of the Drawings

FIG. 1 is a flow diagram illustrating an air-conditioning system according to an embodiment.
FIG. 2 is a flow diagram illustrating an air-conditioning system according to another embodiment.
FIG. 3 is a flow diagram illustrating an air-conditioning system according to still another embodiment.

### Best Mode for Carrying out the Invention

An embodiment of an absorption refrigeration cycle and a compression-absorption refrigeration cycle according to the present invention will be described with reference to the drawings. The following describes an example in which a compression-absorption refrigeration cycle according to the present invention is applied to an air-conditioning system 100 (exemplary compression-absorption refrigeration cycle) for an automobile air conditioner.

### Configuration of Air-Conditioning System

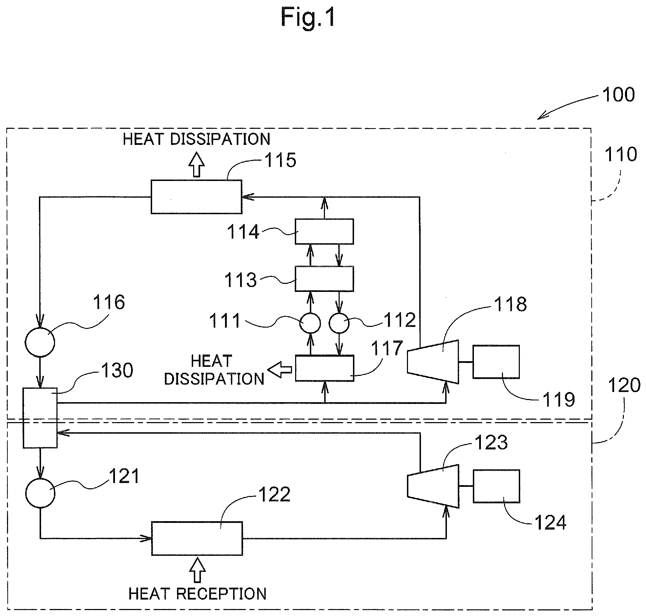

The air-conditioning system 100 according to the present embodiment includes an absorption refrigeration cycle and a compression refrigeration cycle that are combined in such a manner as to share a refrigerant. The air-conditioning system 100 includes a high-pressure stage part 110, a low-pressure stage part 120, and a vapor-liquid separation device 130 (FIG. 1).

The high-pressure stage part 110 includes a pump 111, a solution pressure reducing device 112, a solution heat exchanger 113, a regenerator 114, a condenser 115, a refrigerant expansion device 116, and an absorber 117.

The low-pressure stage part 120 includes a refrigerant expansion device 121, an evaporator 122, and a compressor 123. Note that the compressor 123 is driven by a motor 124. However, the compressor 123 may be driven by power of an engine or the like.

The vapor-liquid separation device 130 is provided at a boundary between the high-pressure stage part 110 and the low-pressure stage part 120.
The vapor-liquid separation device 130 is provided in the high-pressure stage part 110 at a position located downstream of the refrigerant expansion device 116 and upstream of the absorber 117, and is provided in the low-pressure stage part 120 downstream of the compressor 123 and upstream of the refrigerant expansion device 121.

### Operations of Air-Conditioning System

A case where the air-conditioning system 100 performs a cooling operation will be described. The air inside a vehicle is cooled in the evaporator 122. That is, in the evaporator 122, the refrigerant receives heat from the air inside the vehicle, and the refrigerant is evaporated. The refrigerant is compressed in the compressor 123 into superheated vapor, which is then introduced into the vapor-liquid separation device 130.

As will be described later, the refrigerant that is separated in the regenerator 114 from an absorbing liquid (strong solution) that has absorbed the refrigerant is condensed in the condenser 115. The condensed refrigerant is reduced in pressure in the refrigerant expansion device 116 into wet vapor, which is then introduced into the vapor-liquid separation device 130. In the vapor-liquid separation device 130, the refrigerant in the form of the wet vapor is mixed with the refrigerant in the form of the above-described superheated vapor that has been compressed in the compressor 123, and is thereafter subjected to vapor-liquid separation into a saturated liquid and saturated vapor.

The gas component (saturated vapor) of the refrigerant that has been separated in the vapor-liquid separation device 130 flows through the high-pressure stage part 110. The gas component of the refrigerant is absorbed by the absorbing liquid in the absorber 117. In the present embodiment, the absorber 117 is of air cooling type, and heat generated by the mixing of the refrigerant and the absorbing liquid is removed by air cooling. The absorbing liquid (strong solution) that has absorbed the refrigerant is increased in pressured by the pump 111, then reaches the solution heat exchanger 113, and is preheated in the solution heat exchanger 113 before reaching the regenerator 114.

In the regenerator 114, the absorbing liquid (strong solution) that has absorbed the refrigerant is heated. At this time, a part of the refrigerant is vaporized due to the difference in boiling point between the refrigerant and the absorbing liquid. Note that heating energy is supplied from exhaust of the engine.

The absorbing liquid (weak solution) from which a part of the refrigerant has been separated in the regenerator 114 is cooled in the solution heat exchanger 113, thereafter reduced in pressure in the solution pressure reducing device 112, and returns to the absorber 117.

The refrigerant that has been separated from the absorbing liquid (strong solution) in the regenerator 114 is condensed in the condenser 115. As described above, the condensed refrigerant is reduced in pressure in the refrigerant expansion device 116 into wet vapor, which is then introduced into the vapor-liquid separation device 130.

However, in a situation where the amount of exhaust heat from the engine is small, such as immediately after starting the vehicle, there may be an insufficient amount of energy for heating the absorbing liquid (strong solution) that has absorbed the refrigerant in the regenerator 114. In this case, a path in which a compressor 118 is provided is also used in addition to a path in which the absorber 117, the pump 111, the solution heat exchanger 113, and the regenerator 114 are provided. In this case, a part of the gas component of the refrigerant that has been separated in the vapor-liquid separation device 130 is compressed in the compressor 118 into superheated vapor, which is then introduced into the condenser 115, together with the refrigerant that has been separated from the absorbing liquid (strong solution) in the regenerator 114. Note that the compressor 118 is driven by a motor 119. However, the compressor 118 may be driven by power of the engine or the like. In the case where there is almost no energy for heating the absorbing liquid (strong solution) that has absorbed the refrigerant in the regenerator 114, the entire gas component of the refrigerant that has been separated in the vapor-liquid separation device 130 is compressed in the compressor 118 into superheated vapor, which is then introduced into the condenser 115.

### Refrigerant

In the air-conditioning system 100 according to the present embodiment, the refrigerant include at least one of an HFO-based refrigerant, an HFC-based refrigerant, and an HCFO-based refrigerant, and has a global warming potential (GWP) of less than 1000.

The term "HFO-based refrigerant" (hydrofluoroolefin-based refrigerant) means a group of compounds each having a structure in which some of the hydrogen atoms of an unsaturated hydrocarbon compound are substituted with fluorine atoms. Examples thereof include R1234yf (2,3,3,3-tetrafluoropropene), R1234ze (E) (trans-1,3,3,3-tetrafluoropropene), R1234ze (Z) (cis-1,3,3,3-tetrafluoropropene), R1336mzz (E) (trans-1,1,1,4,4,4-hexafluoro-2-butane), R1336mzz (Z) (cis-1,1,1,4,4,4-hexafluoro-2-butane), R1243zf (3,3,3-trifluoropropene), and R1233zd (E) (trans-1-chloro-3,3,3-trifluoropropene). Note that each of the refrigerants illustrated above has a global warming potential of less than 10, and corresponds to a so-called low-GWP refrigerant.

The term "HFC-based refrigerant" (hydrofluorocarbon-based refrigerant) means a group of compounds each having a structure in which some of the hydrogen atoms of a saturated hydrocarbon compound are substituted with fluorine atoms. Examples thereof include R32 (difluoromethane). R32 corresponds to a so-called low-GWP refrigerant, and has a global warming potential of 675.

The term "HCFO-based refrigerant" (hydrochlorofluoroolefin -based refrigerant) means a group of unsaturated hydrocarbon compounds each composed of hydrogen, chlorine, fluorine, and carbon. Examples thereof include R1224yd (Z) ((Z)-1-chloro-2,3,3,3-tetrafluoropropene). R1224yd (Z) corresponds to a so-called low-GWP refrigerant, and has a global warming potential of less than 10.

In the air-conditioning system according to the present embodiment, the refrigerant may be one refrigerant, or a mixture of two or three refrigerants selected from an HFO-based refrigerant, an HFC-based refrigerant, and an HCFO-based refrigerant. That is, the refrigerant may be either an HFO-based refrigerant alone, an HFC-based refrigerant alone, an HCFO-based refrigerant alone, a mixture of an HFO-based refrigerant and an HFC-based refrigerant, a mixture of an HFO-based refrigerant and an HCFO-based refrigerant, a mixture of an HFC-based refrigerant and an HCFO-based refrigerant, or a mixture of an HFO-based refrigerant, an HFC-based refrigerant, and an HCFO-based refrigerant. In each case, the HFO-based refrigerant, the HFC-based refrigerant, and the HCFO-based refrigerant may each be a single compound, or a mixture of a plurality of compounds belonging to the respective classes thereof.

### Absorbing Liquid

In the air-conditioning system 100 according to the present embodiment, the absorbing liquid consists of triethylene glycol butyl methyl ether.

The compound usable as the absorbing liquid is triethylene glycol butyl methyl ether.

### Other Embodiments

The above embodiment has described, as an example, the air-conditioning system 100 (compression-absorption refrigeration cycle) including an absorption refrigeration cycle and a compression refrigeration cycle that are combined in such a manner as to share a refrigerant. However, the above-described combination of a refrigerant and an absorbing liquid may be applied to an absorption refrigeration cycle that does not have any compression refrigeration cycle.

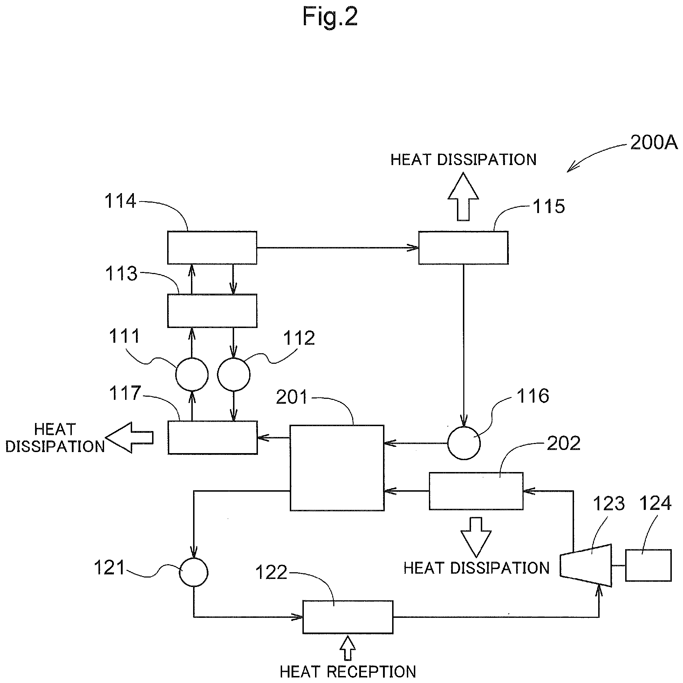

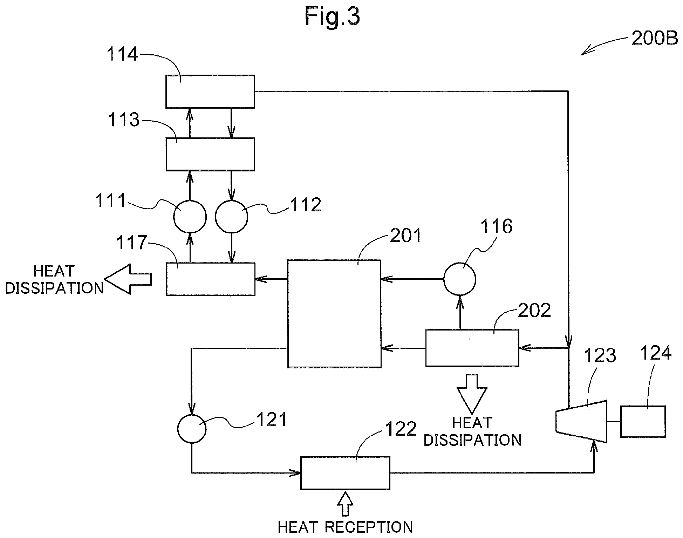

Although the above embodiment has described, as an example, a configuration in which the high-pressure stage part 110 includes the compressor 118, the absorption refrigeration cycle according to the present invention need not include any compressor. FIGS. 2 and 3 shows examples of an air-conditioning system including an absorption refrigeration cycle that does not include any compressor. In FIGS. 2 and 3, constituent elements that are the same as those of the air-conditioning system 100 of FIG. 1 are given the same reference numerals.

An air-conditioning system 200A shown in FIG. 2 includes an evaporator 201 and a condenser 202 in place of the vapor-liquid separation device 130 of the air-conditioning system 100. The evaporator 201 functions as a refrigerant supercooler. An absorption refrigeration cycle composed of the regenerator 114, the condenser 115, the refrigerant expansion device 116, the evaporator 201, the pump 111, and the solution pressure reducing device 112, as well as the solution heat exchanger 113 uses the combination of a refrigerant and an absorbing liquid according to the above embodiment. On the other hand, there is no limitation on the refrigerant for a compression refrigeration cycle composed of the refrigerant expansion device 121, the evaporator 122, the compressor 123, the condenser 202, and the evaporator 201. With the air-conditioning system 200A, the working pressure of the absorption refrigeration cycle is higher than that in the case of using commonly used water as the refrigerant, and it is thus possible to reduce the size of the absorption refrigeration cycle.

In an air-conditioning system 200B shown in FIG. 3, an absorption refrigeration cycle and a compression refrigeration cycle shares the condenser 202. Compared to the air-conditioning system 200A (FIG. 2), the condenser (the condenser 115 in FIG. 2) of the absorption refrigeration cycle has been omitted. Accordingly, with the air-conditioning system 200B, it is possible to achieve a further size reduction compared to the air-conditioning system 200A. In the air-conditioning system 200B, the regenerator 114, the condenser 202, the refrigerant expansion device 116, the evaporator 201, the pump 111 and the solution pressure reducing device 112, as well as the solution heat exchanger 113 form the absorption refrigeration cycle, and the refrigerant expansion device 121, the evaporator 122, the compressor 123, the condenser 202, and the evaporator 201 form the compression refrigeration cycle. Here, the evaporator 201 also functions as a refrigerant supercooler. Since the condenser 202 is shared, the absorption refrigeration cycle and the compression refrigeration cycle of the air-conditioning system 200B use the same refrigerant, and the refrigerant according to the embodiment is used. In addition, the absorbing liquid used in the absorption refrigeration cycle is also the same as that described in the above embodiment.

Although the foregoing has described embodiments of an inventive aspect in which the refrigerant includes at least one of an HFO-based refrigerant, an HFC-based refrigerant, and an HCFO-based refrigerant, it is apparent that the present specification also discloses an inventive aspect in which the refrigerant includes at least one of an HFO-based refrigerant and an HFC-based refrigerant (an HCFO-based refrigerant is not included as a candidate refrigerant). That is, a characteristic feature of the absorption refrigeration cycle according to the invention lies in operating using: a refrigerant having a global warming potential of less than 1000, and including at least one of an HFO-based refrigerant and an HFC-based refrigerant; and an absorbing liquid including at least one compound represented by Formulas (1), (2), and (3):

R¹-(OCH₂CH₂)ₙ-OR² (1)

R¹-(OCH₂CH(CH₃))ₙ-OR² (2)

R¹COO-(OCH₂CH₂)ₙ-OR² (3)

where R¹ and R² are each independently a hydrogen atom or an alkyl group having a carbon number of 1 or more and 6 or less, and n is an integer of 1 or more and 6 or less.

The embodiments disclosed herein are in all respects as illustrative, and various modifications may be made without departing from the technical teaching clearly supported by the present description.

### Examples

The present invention will now be described in further detail by way of examples. However, the following examples should not be construed as limiting the present invention.

### Compounds of Examples and Comparative Examples

Comparative Example 4: Diethylene glycol dibutyl ether Examples 2, 4, and 6: Triethylene glycol butyl methyl ether
Comparative Examples 5 and 6: Diethylene glycol diethyl ether
Comparative Example 1: [HMIM][Tf₂N] (Ionic liquid)
Comparative Example 2: [BMIM][Tf₂N] (Ionic liquid)
Comparative Example 3:[BMIM][PF₆] (Ionic liquid)

Note that "[HMIM]" represents "1-hexyl -3-methyl imidazolium cation", "[BMIM]" represents "1-butyl-3-methyl imidazolium cation", and "[Tf₂N]" represents "bis trifluoromethylsulfonyl anion".

### Testing Methods

### Test 1

For each of the compounds of the examples and the comparative examples, the absorption characteristics in the case of using R1234yf as a refrigerant were measured, and the circulation ratio in an absorption refrigeration cycle was determined. The circulation ratio was determined under the temperature conditions: an evaporation temperature of 10°C, a regeneration temperature of 80°C, an absorption temperature of 35°C, and a condensation temperature of 35°C. The results are shown in Table 1.

**Table 1: Circulation Ratios and Refrigerant Concentrations of Examples and Comparative Examples**

| [Table 1] | | | | |
|---|---|---|---|---|
| | Compound name | Absorption refrigerant concentration [mass%] | Regeneration refrigerant concentration [mass%] | Circulation ratio [-] |
| Comparative Example 4 | Diethylene glycol dibutyl ether | 23.8 | 18.1 | **14** |
| Example 2 | Triethylene glycol butyl methyl ether | 24.5 | 18.0 | 13 |
| Comparative Example 5 | Diethylene glycol diethyl ether | 33.3 | 24.6 | 9 |
| Com. Ex. 1 | [HMIM][Tf₂N] | 7.5 | 5.7 | Above 50 |
| Com. Ex. 2 | [BMIM][Tf₂N] | 6.7 | 5.3 | Above 60 |

As shown in Table 1, Example 2, which is an example according to the present invention, yielded circulation ratios lower than those yielded by Comparative Examples 1 and 2. This has shown that Example 2 exhibited favorable physical properties as absorbing liquids used in combination with R1234yf.

### Test 2

For each of the compounds of the examples and the comparative examples, the absorption characteristics in the case of using R32 as a refrigerant were measured, and the circulation ratio in an absorption refrigeration cycle was determined. The circulation ratio was determined under the temperature conditions: an evaporation temperature of 10°C, a regeneration temperature of 80°C, an absorption temperature of 35°C, and a condensation temperature of 35°C. The results are shown in Table 2.

**Table 2: Circulation Ratios and Refrigerant Concentrations of Examples and Comparative Examples**

| [Table 2] | | | | |
|---|---|---|---|---|
| | Compound name | Absorption refrigerant concentration [mass%] | Regeneration refrigerant concentration [mass%] | Circulation ratio [-] |
| Example 4 | Triethylene glycol butyl methyl ether | 24.3 | 17.7 | 13 |
| Comparative Example 6 | Diethylene glycol diethyl ether | 29.4 | 21.6 | 10 |
| Com. Ex. 3 | [BMIM][PF₆] | 15.5 | 10.7 | 19 |

As shown in Table 2, Example 4, which is an example according to the present invention, yielded circulation ratios lower than that yielded by Comparative Example 3. This has shown that Example 4 exhibited favorable physical properties as absorbing liquids used in combination with R32.

### Test 3

For the compound of Example 6, the absorption characteristics in the case of using R1224yd (Z) as a refrigerant were measured, and the circulation ratio in an absorption refrigeration cycle was determined. The circulation ratio was determined under the temperature conditions: an evaporation temperature of 10°C, a regeneration temperature of 80°C, an absorption temperature of 35°C, and a condensation temperature of 35°C. The results are shown in Table 3.

**Table 3: Circulation Ratio and Refrigerant Concentration of Example 6**

| [Table 3] | | | | |
|---|---|---|---|---|
| | Compound name | Absorption refrigerant concentration [mass%] | Regeneration refrigerant concentration [mass%] | Circulation ratio [-] |
| Example 6 | Triethylene glycol butyl methyl ether | 36.3 | 22.2 | 6 |

As shown in Table 3, Example 6, which is an example of the present invention, yielded a circulation ratio comparable to those yielded by the comparative examples. This has shown that Example 6 exhibited favorable physical properties as an absorbing liquid used in combination with R1224yd (Z).

### Industrial Applicability

The present invention is applicable to absorption refrigeration cycles and compression-absorption refrigeration cycle for air-conditioning systems, for example.

### Description of Reference Signs

- 100:: Air-conditioning system
- 110:: High-pressure stage part
- 111:: Pump
- 112:: Solution pressure reducing device
- 113:: Solution heat exchanger
- 114:: Regenerator
- 115:: Condenser
- 116:: Refrigerant expansion device
- 117:: Absorber
- 118:: Compressor
- 120:: Low-pressure stage part
- 121:: Refrigerant expansion device
- 122:: Evaporator
- 123:: Compressor
- 124:: Motor
- 130:: Vapor-liquid separation device

## Claims

1. An absorption refrigeration cycle configured to operate using:
a refrigerant having a global warming potential of less than 1000, and including at least one of an HFO-based refrigerant, an HFC-based refrigerant, and an HCFO-based refrigerant; and
an absorbing liquid including triethylene glycol butyl methyl ether.

2. A compression-absorption refrigeration cycle comprising:
the absorption refrigeration cycle according to claim 1; and
a compression refrigeration cycle,
wherein the absorption refrigeration cycle and the compression refrigeration cycle are combined in such a manner as to share the refrigerant.

## Patentansprüche

1. Absorptionskältekreislauf, der dafür konfiguriert ist unter Verwendung von Folgendem zu arbeiten:
eines Kältemittels, das ein Treibhauspotenzial von weniger als 1000 aufweist und mindestens eines von einem Kältemittel auf HFO-Basis, einem Kältemittel auf HFC-Basis und einem Kältemittel auf HCFO-Basis einschließt; und
einer Absorptionsflüssigkeit, die Triethylenglykolbutylmethylether einschließt.

2. Kompressionsabsorptionskältekreislauf, umfassend:
den Absorptionskältekreislauf nach Anspruch 1 und
einen Kompressionskältekreislauf,
wobei der Absorptionskältekreislauf und der Kompressionskältekreislauf auf eine solche Weise miteinander kombiniert sind, dass sie das Kältemittel gemeinsam nutzen.

## Revendications

1. Cycle de réfrigération à absorption configuré pour fonctionner en utilisant :
un réfrigérant présentant un potentiel de réchauffement global inférieur à 1 000, et incluant au moins un réfrigérant à base de HFO, un réfrigérant à base de HFC et un réfrigérant à base de HCFO ; et
un liquide absorbant incluant du triéthylène glycol butyl méthyl éther.

2. Cycle de réfrigération à absorption-compression comprenant :
le cycle de réfrigération à absorption selon la revendication 1 ; et
un cycle de réfrigération à compression,
dans lequel le cycle de réfrigération à absorption et le cycle de réfrigération à compression sont combinés de manière à partager le réfrigérant.
